Europäisches Patentamt

**European Patent Office**

Office européen des brevets

(19)

(11) Numéro de publication : **0 058 119
B1**

# (12) FASCICULE DE BREVET EUROPÉEN

(45) Date de publication du fascicule du brevet :
**28.11.84**

(21) Numéro de dépôt : **82400203.4**

(22) Date de dépôt : **05.02.82**

(51) Int. Cl.³ : **F 16 L 27/08**, F 16 L 3/00,
A 47 L 9/24

(54) **Bras d'aspiration de fluide gazeux sous la forme d'un conduit tubulaire déformable.**

(30) Priorité : **10.02.81 FR 8102561**

(43) Date de publication de la demande :
**18.08.82 Bulletin 82/33**

(45) Mention de la délivrance du brevet :
**28.11.84 Bulletin 84/48**

(84) Etats contractants désignés :
**AT BE CH DE GB IT LI LU NL SE**

(56) Documents cités :
**DE-A- 2 619 127
FR-A- 2 347 602
US-A- 2 769 999
US-A- 3 298 544**

(73) Titulaire : **Amphoux, André
12, rue Jules César
F-75012 Paris (FR)**

**Carbon, Jean-Michel
1, rue des Vignerons
F-95110 Sannois (FR)**

(72) Inventeur : **Amphoux, André
12, rue Jules César
F-75012 Paris (FR)**
Inventeur : **Carbon, Jean-Michel
1, rue des Vignerons
F-95110 Sannois (FR)**

(74) Mandataire : **Derambure, Christian
Cabinet BUGNION ASSOCIES SARL 116, boulevard
Haussmann
F-75008 Paris (FR)**

Jouve, 18, rue St-Denis, 75001 Paris, France

## Description

L'invention concerne un bras d'aspiration de fluide gazeux.

Ce bras est fixé à sa première extrémité à un support ; sa seconde extrémité est libre, comporte un capot d'aspiration, peut être déplacée en tous sens selon les besoins, tout en restant — en l'absence de sollicitation extérieure — dans la position où on l'a amenée. Il est destiné à capter des fumées ou vapeurs dangereuses ou polluantes, des poussières, des particules en suspension dans l'air, à proximité de postes de travail (peinture, soudure, etc.).

On connaît déjà de tels bras d'aspiration. Dans une première variante, le conduit est totalement flexible et supporté par un dispositif de suspension déformable, ce qui est complexe, coûteux, encombrant, mal commode. Dans le cas où le dispositif de suspension est placé à l'intérieur du conduit, le débit d'aspiration est diminué et le dispositif de suspension soumis à la corrosion du fluide gazeux dans le conduit.

Dans une deuxième variante, le bras comporte une succession de manchons rigides, associés l'un à l'autre par des articulations et des moyens de maintien externes (brevet américain n° 3 298 544), ce qui est complexe, peu adapté à l'usage considéré et permettant mal un blocage relatif temporaire des manchons.

Dans une troisième variante (FRA-2 347 602), le bras comporte au moins un manchon flexible interposé entre deux manchons rigides et des moyens mécaniques de maintien du conduit comportant au moins deux pièces associées rigidement respectivement chacune à un manchon rigide et associées entre elles à pivotement autour d'un axe. Des ressorts de rappel linéaires, formés de ressorts à boudin sont fixés à l'extérieur du conduit, ce qui augmente l'encombrement du bras et l'insécurité.

Dans une quatrième variante, le bras comporte une succession de manchons rigides et de manchons flexibles. Les manchons rigides sont articulés entre eux au moyen d'une articulation comportant un frein. Des ressorts d'équilibrage linéaire tels que des ressorts à boudin sont fixés en des points du bras, à l'extérieur du conduit, en vue d'assurer l'équilibre du bras dans ses différentes positions. Cette variante présente certains inconvénients : le ressort linéaire à boudin augmente l'encombrement du bras, ce qui est une gêne. Le ressort est exposé à des actions malencontreuses pouvant le détériorer avec le risque d'insécurité inhérent (pour l'utilisateur, pour le bras lui-même). Le ressort ne travaille pas dans des conditions optimales puisque à un couple de renversement résultant du poids du bras en porte-à-faux, il oppose une force de rappel linéaire. Cette force de rappel ne dépend pas exclusivement de la position relative des manchons rigides successifs. Un tel ressort a une force de rappel limitée ce qui limite d'autant la puissance d'aspiration du bras ou nécessite que l'utilisateur déplace constamment le bras pour l'amener à proximité immédiate du poste de travail. Les mouvements du bras sont alors nombreux mais peu précis et brusques. En outre, dans cette variante, il n'est pas possible de prévoir un ressort pour chaque manchon flexible si cela est souhaité. Enfin, le bras ne peut être bloqué dans toutes positions souhaitées et le capot terminal d'aspiration ne peut être déplacé en tous sens autour d'un point. Par conséquent, un bras selon cette variante est peu commode, de puissance limitée, d'usage dangereux, nécessitant de nombreux déplacements.

L'invention est définie par la revendication 1 et vise à remédier à ces inconvénients. A cet effet, elle propose un bras d'aspiration sous la forme d'un conduit tubulaire déformable comportant au moins un manchon flexible déformable interposé entre au moins deux manchons rigides associés entre eux par des moyens mécaniques de maintien comportant deux pièces de maintien et de protection associées l'une à l'autre à pivotement et, intégré, un ressort spiralé de rappel.

Aux moyens de maintien peut être intégré un organe de blocage temporaire du bras dans au moins une position de blocage prédéterminée. La forme de réalisation des pièces de maintien et de protection donne au bras les meilleures caractéristiques d'emploi. Le capot terminal d'aspiration est monté pivotant autour d'une rotule.

Le bras selon l'invention est d'une construction simple et fiable. Il peut être déformé par l'utilisateur facilement, avec précision, sans manœuvres complexes. Une fois placé dans une position particulière, il y demeure, quelle que soit cette position et malgré son propre poids. Il peut aussi être temporairement bloqué dans une position donnée. La conception des moyens mécaniques de maintien et notamment le ressort spiralé utilisé permet de placer si nécessaire un tel ressort spiralé à chaque manchon flexible. Le ressort spiralé peut exercer une force de rappel importante, ce qui permet d'augmenter le poids du bras donc d'augmenter son diamètre, ce qui conduit à une augmentation du débit d'aspiration, ce qui permet une bonne aspiration même si le capot d'aspiration est éloigné de la zone d'aspiration. Donc, cela évite des déplacements incessants et fastidieux du capot d'aspiration. L'entretien du bras est très commode, le ressort de rappel est protégé ainsi que les manchons flexibles.

Les caractéristiques de l'invention résulteront de la description qui suivra en référence aux dessins annexés dans lesquels :

La figure 1 est une vue schématique, en élévation, du bras suivant l'invention, le plan de figure étant le plan du bras ;

la figure 2 est une vue schématique en perspective des moyens mécaniques de maintien du bras, montrant les moyens de blocage et de rappel.

Le bras d'aspiration 1 de fluide gazeux, selon l'invention est un conduit tubulaire déformable, fixé à sa première extrémité 2 à un support 3 ; dont la seconde extrémité 4 est libre, peut être déplacée en tous sens (selon les besoins), tout en restant, en l'absence de sollicitation extérieure, dans la position où on l'a amenée.

Le conduit comporte au moins un manchon 5, flexible, déformable, associé rigidement à ses deux parties extrêmes 6 aux deux parties extrêmes 7 correspondantes de deux manchons 8, rigides et indéformables.

Les manchons 5, 8, définissent, placés bout à bout et alternés le conduit. Ils ont par exemple une section droite transversale circulaire, notamment substantiellement constante le long du conduit (pouvant aller et même dépasser 175 mm de diamètre). Les manchons 8 sont par exemple rectilignes. Des organes d'association réciproque des manchons 5, 8. Les manchons 8 sont par exemple métalliques ou en matière plastique et les manchons 5 en matière plastique plissée en accordéon pour permettre le déformation.

Le bras 1 comporte des moyens mécaniques de maintien 9 du conduit, intégrés à celui-ci c'est-à-dire placés contre ou à proximité immédiate et le long de celui-ci, quelle qu'en soit sa position, donc sans augmenter l'encombrement du conduit. Le bras est ainsi compact. Les moyens 9 sont associés à deux manchons 8 adjacents et placés en regard du manchon 5 intermédiaire. Les moyens 9 comportent au moins deux pièces 10a, 10b, de maintien et de protection, rigides, allongées, associées l'une à l'autre et l'une contre l'autre à pivotement autour d'un axe 11. Les pièces 10a, 10b sont associées rigidement respectivement aux parties extrêmes 7 des deux manchons 8.

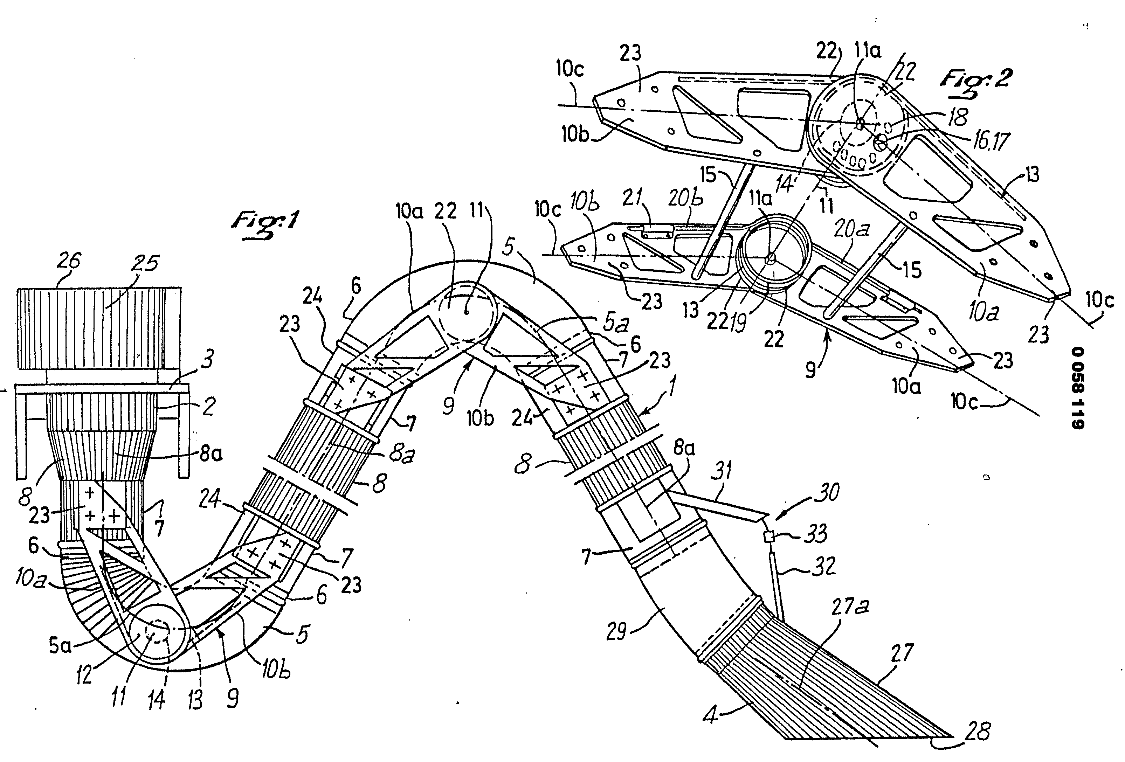

Préférentiellement, l'axe 11 est horizontal. Dans ce cas, les pièces 10a, 10b, sont situées dans un plan vertical. Les axes 8a et ligne centrale 5a des manchons 8, 5, sont aussi placés dans un même plan vertical appelé plan du bras (plan de la figure 1). Le bras 1 est placé en porte-à-faux et, du fait de son propre poids, a tendance à pivoter et/ou à se déformer vers le bas, notamment du côté de l'extrémité 2.

Les moyens 9 assurent simultanément le maintien relatif de deux manchons 8 adjacents et la protection latérale du manchon 5 intermédiaire, tout en autorisant la déformation de l'ensemble de ces trois manchons 5, 8, par pivotement relatifs des deux manchons 8, autour de l'axe 11. A cet effet, les pièces 10a, 10b et l'axe 11 sont placés latéralement et au droit du manchon 5 correspondant.

Les moyens 9 comportent, intégré, d'une part un ressort 13 spiralé, de rappel (en rotation) des deux pièces 10a, 10b, l'une par rapport à l'autre, donc des manchons 8 correspondants, dans le sens opposé à celui résultant du poids du bras 1 ; et, d'autre part, également intégré, un organe de freinage 14 du mouvement relatif de pivotement des pièces 10a, 10b, l'une par rapport à l'autre, donc des manchons 8 correspondants.

La combinaison du ressort spiralé 13 et de l'organe de freinage 14 permet de compenser le poids du bras placé en porte-à-faux, d'assurer son maintien dans toute position souhaitée tout en autorisant sa déformation.

Les moyens 9 comportent éventuellement un organe 12 de blocage temporaire des pièces 10a, 10b, l'une par rapport à l'autre dans au moins une position relative de blocage prédéterminée, donc des manchons 8 correspondants. Préférentiellement, il est prévu une pluralité de positions de blocage, notamment régulièrement écartées de l'axe 11.

Préférentiellement, les moyens 9 comportent une paire de couple de pièces 10a, 10b. Les deux couples de pièces 10a, 10b sont placées en regard et écartées l'une de l'autre en définissant entre elles un logement libre où vient se placer le manchon 5 correspondant. Chaque pièce 10a, 10b, d'un couple est associée rigidement à la pièce correspondante 10a, 10b, de l'autre couple par au moins une entretoise 15.

Chaque pièce 10a, 10b, comporte un flan plat, allongé, notamment ajouré, ayant d'une part une partie extrême 22, d'association à pivotement avec l'autre pièce 10b, 10a, où sont situés l'organe de blocage 12, le ressort 13 et l'organe de freinage 14 ; et d'autre part, une partie extrême opposée de fixation 23 à une bride 24 fixée rigidement à la partie extrême 7 d'un manchon 8. Préférentiellement, la partie extrême 23 est située au droit de l'axe 8a du manchon 8 correspondant. L'axe longitudinal 10c d'une pièce 10a, 10b, est incliné par rapport à l'axe 8a du manchon 8 correspondant du côté de l'angle aigu formé par les deux manchons 8 adjacents. Les deux pièces 10a, 10b, sont associées à pivotement l'une avec l'autre au moyen par exemple d'un pivot associé à une vis de serrage 11a.

L'organe de blocage 12 est par exemple une bille 16, portée par l'une des pièces (10a) sur sa face interne, sollicitée par un organe élastique 17 en direction d'un trou borgne 18 de l'autre pièce (10b), ménagé sur sa face externe. Le trou borgne 18 est unique ou appartient à une pluralité (sept sur la figure 2) de trous borgnes notamment régulièrement disposés autour de l'axe 11. La bille 16 est par exemple associée à la pièce située du côté extérieur pour que d'une part les trous borgnes 18 soient placés sur la pièce intérieure et donc soient masqués de l'extérieur et ainsi protégés et que, d'autre part, la bille 16 et l'organe élastique 17 soient accessibles de l'extérieur pour le réglage.

Le ressort 13 comporte des spirales médianes 19 et deux parties extrêmes libres rectilignes 20a, 20b associées rigidement respectivement aux pièces 10a, 10b, au moyen de cavaliers de blocage 21 ou similaire. Le ressort spiralé 13 est placé sur et au droit des faces internes des pièces 10a, 10b, c'est-à-dire dans le logement défini par celles-ci. De ce fait, le ressort spiralé 13 est invisible latéralement de l'extérieur et protégé par les pièces 10a, 10b. Le ressort spiralé 13 ne crée donc pas un encombrement supérieur à celui du conduit. Une sécurité totale est assurée car le ressort spiralé 13 ne risque pas de se casser étant donné qu'il travaille dans des conditions normales et qu'il est protégé. A supposer même qu'il se casse, il n'est pas source d'insécurité car étant fixé à ses deux extrémités 20a, 20b, il travaille en rotation. Les spirales médianes 19 sont enroulées autour de l'axe 11. La longueur du ressort spiralé 13 et le diamètre du fil qui le constitue sont définis en fonction du poids du bras. L'utilisation d'un tel ressort spiralé 13 au lieu de tout autre type non équivalent (notamment un ressort linéaire) présente de nombreux avantages. Ce ressort spiralé 13 oppose en effet un couple de rappel à un couple (effet du poids) ; le couple de rappel n'est fonction que de l'angle relatif des manchons 8 correspondants ; il répond parfaitement aux sollicitations de l'opérateur avec beaucoup de précision, ce qui évite les efforts anormaux et brusques ; les manchons 8 subissent toujours dans le fil du métal une contrainte de flexion.

L'organe de freinage 14 est par exemple un disque à friction utilisé en fonction glissante et agissant en permanence, interposé entre les deux pièces 10a, 10b, dans les parties 22. La force de freinage est réglable par réglage de la vis de serrage 11a des deux pièces 10a, 10b l'une sur l'autre.

Dans la forme de réalisation représentée, le bras 1 a la forme générale de deux V successifs, ayant une branche commune, le premier — du côté de l'extrémité 2 — dans son sens normal et le second — du côté de l'extrémité 4 — renversé. Le conduit comporte deux manchons flexibles 5 et trois manchons rigides 8. Les deux axes 11 des deux moyens 9 associés aux deux manchons flexibles 5 sont horizontaux et parallèles entre eux. Les deux moyens 9 sont substantiellement semblables. Eventuellement, seuls les moyens 9 du côté de l'extrémité 2 comportent le ressort spiralé 13, les moyens 9 du côté de l'extrémité 4 en étant dépourvus ; cette adaptation est obtenue sans modification substantielle des moyens 9 ; l'organe de freinage 14 du côté de l'extrémité 2 peut exercer un freinage plus important que celui du côté de l'extrémité 4.

Le manchon 8 de l'extrémité 2 est par exemple dirigé vers le haut et associé au support 3 à pivotement autour d'un axe 25 vertical, au moyen d'une bride tournante ou équivalente. Le manchon 8 de l'extrémité 2 peut comporter éventuellement un piquage sur lequel peut être monté un tube flexible d'aspiration pouvant être utilisé par l'utilisateur selon les besoins. Au support 3 est associé un conduit 26 d'une installation d'aspiration en communication avec ledit manchon 8.

Le conduit comporte préférentiellement à son extrémité 4 un capot terminal d'aspiration 27, d'axe 27a, rigide, ayant une ouverture terminale 28 fortement inclinée par rapport à l'axe 27a, (par exemple de l'ordre de 135°) de manière à donner une grande surface d'aspiration normalement placée substantiellement horizontalement pour une meilleure efficacité. Ce capot 27 est associé au dernier manchon rigide 8, du côté de l'extrémité 4, par l'intermédiaire d'un manchon déformable 29 présentant les mêmes caractéristiques générales qu'un manchon 5. Au capot 27 et au manchon déformable 29 sont associés des seconds moyens mécaniques de maintien 30 comportant par exemple un cadre 31, rigide, constituant une poignée associée rigidement au manchon 8 considéré au voisinage de son extrémité d'association avec le manchon 29, saillant de ce manchon 8, au-dessus de celui-ci et au-dessus du manchon 29, en étant incliné (par exemple à environ 45°) par rapport à l'axe 8a de ce manchon 8. Il comporte en outre un support 32, tel qu'une tige, associé rigidement au capot 27, faisant saillie au-dessus de celui-ci dirigé vers le cadre 31, incliné sur l'axe 27a. Il comporte enfin un organe 33, d'association du support 32 au cadre 31 prenant la forme d'une rotule comportant un dispositif de blocage permettant de déplacer le capot 27 en tous sens autour de la rotule 33, ce qui rend l'utilisation du bras très commode, tout en le bloquant temporairement par rapport au dernier manchon 8 dans toutes positions relatives souhaitées.

Dans le capot 27 peut être monté un clapet de réglage (pivotant, à tiroir, etc.) du débit d'aspiration auquel est associé un organe de commande externe (poignée, etc.).

Sur la partie supérieure du capot 27 peut être rigidement fixée une poignée de manipulation.

Dans le capot 27 peut être montée une lampe d'éclairage protégée par un carter approprié permettant l'éclairage du poste de travail.

Les moyens 9 du côté de l'extrémité 4 peuvent comporter un ressort de compression en sens axial des deux pièces 10a, 10b, l'une contre l'autre et contre l'organe de freinage 14.

Les moyens 9 peuvent comporter sur leur face interne une couronne ou ses ergots, s'étendant le long de l'axe 11 et vers l'intérieur définissant des butées externes pour le ressort spiralé 13 en cas de rupture, ce qui assure une sécurité positive de celui-ci.

**Revendications**

1. Bras d'aspiration de fluide gazeux sous la forme d'un conduit tubulaire du type comportant au moins un manchon flexible (5) interposé entre deux manchons rigides (8) et des moyens mécaniques de maintien (9) du conduit comprenant au moins deux pièces (10a, 10b) associées rigidement respectivement chacune à un manchon rigide (8) et associées entre elles à pivotement autour d'un axe (11) caractérisé par le fait qu'il comporte au moins un ressort de rappel (13) des pièces (10a, 10b) sous la forme d'un ressort spiralé associé aux pièces (10a, 10b) c'est-à-dire intégré aux moyens (9).

2. Bras d'aspiration selon la revendication 1, caractérisé par le fait que le ressort spiralé de rappel (13) comporte des spires (19) d'axe (11) de pivotement des pièces (10a, 10b) et des parties extrêmes libres (20a, 20b) associées rigidement aux pièces (10a, 10b).

3. Bras d'aspiration selon l'une quelconque des revendications 1 et 2, caractérisé par le fait que le ressort spiralé de rappel (13) est placé sur et au droit des faces internes des pièces (10a, 10b) c'est-à-dire dans le logement défini par celles-ci.

4. Bras d'aspiration selon l'une quelconque des revendications 1 à 3, caractérisé par le fait qu'il comporte au moins un organe (12) de blocage temporaire des deux pièces (10a, 10b) l'une par rapport à l'autre, dans au moins une position relative de blocage prédéterminée, intégré aux moyens (9).

5. Bras d'aspiration selon l'une quelconque des revendications 1 à 4, caractérisé par le fait que l'organe de blocage (12) comprend une bille (16) portée par une première pièce (10a), sollicitée par un organe élastique (17) en direction d'un trou borgne (18) de la seconde pièce (10b).

6. Bras d'aspiration selon la revendication 5, caractérisé par le fait que la bille (16) est sur la face interne de la pièce (10a) externe ; le trou borne (18) unique ou d'une pluralité de trous borgnes est ménagé sur la face externe de la pièce interne (10b).

7. Bras d'aspiration selon l'une quelconque des revendications 1 à 6, caractérisé par le fait qu'il comporte intégré aux moyens (9) au moins un organe de freinage (14) sous la forme d'un disque à friction utilisé en fonction glissante et agissant en permence, interposé entre les pièces (10a, 10b) la force de freinage étant réglable par réglage d'une vis (11a) de serrage de l'axe de pivotement (11) des deux pièces (10a, 10b).

8. Bras d'aspiration selon l'une quelconque des revendications 1 à 7, caractérisé par le fait que les moyens (9) sont intégrés au conduit, c'est-à-dire placés contre ou à proximité immédiate et le long de celui-ci, quelle que soit sa position, donc sans augmenter l'encombrement du conduit, le bras restant compact.

9. Bras d'aspiration selon l'une quelconque des revendications 1 à 8, caractérisé par le fait que les pièces (10a, 10b) notamment l'axe (11) sont placés latéralement et au droit d'un manchon (5) pour assurer sa protection latérale et celle du ressort (13).

10. Bras d'aspiration selon l'une quelconque des revendications 1 à 9, caractérisé par le fait qu'une pièce (10a, 10b) est associée rigidement à la partie extrême (7) d'un manchon (8) par sa partie extrême (23) située au droit de l'axe (8a), l'axe (10c) de la pièce (10a, 10b) étant incliné par rapport à l'axe (8a) du côté de l'angle aigu formé par les deux manchons (8) adjacents.

11. Bras d'aspiration selon l'une quelconque des revendications 1 à 10, caractérisé par le fait qu'il comporte à sa partie extrême (4) un capot d'aspiration (27) associé au dernier manchon (8) par un manchon déformable (29), le capot (27) et ce manchon (8) étant associés l'un à l'autre par des seconds moyens mécaniques de maintien (30) comportant un cadre (31) associé rigidement au manchon (8), un support (32) associé rigidement au capot (27) et un organe d'association (33) du support (32) au cadre (31) sous la forme d'une rotule comportant un dispositif de blocage.

12. Bras d'aspiration selon la revendication 11, caractérisé par le fait que l'ouverture terminale (28) du capot (27) est inclinée par rapport à l'axe (27a).

13. Bras d'aspiration selon l'une quelconque des revendications 11, 12, caractérisé par le fait que le cadre (31) constitue une poignée, est associé au manchon (8) au voisinage de son extrémité d'association avec le manchon (29), saille de ce manchon (8) au-dessus de celui-ci et au-dessus du manchon (29) en étant incliné par rapport à l'axe (8a).

**Claims**

1. A gaseous fluid suction arm in the form of a tubular pipe of the type comprising at least one flexible sleeve (5) interposed between two rigid sleeves (8) and mechanical means (9) for holding the pipe comprising at least two parts (10a, 10b), each rigidly associated respectively with a rigid sleeve (8) and associated with each other so as to pivot about an axis (11) characterized in that it comprises at least one return spring (13), for the parts (10a, 10b), in the form of a helical spring associated with the parts (10a, 10b), i.e. integrated with the means (9).

2. A suction arm according to claim 1, characterized in that the helical return spring (13) comprises turns (19) which axis is the pivotal axis (11) of the parts (10a, 10b) and free end parts (20a, 20b) associated rigidly with the parts (10a, 10b).

3. A suction arm according to any one of claims 1 and 2, characterized in the helical return spring (13) is placed on and at right angles to the inner faces of the parts (10a, 10b), i.e. in the seat defined by the latter.

4. A suction arm according to any one of claims 1 to 3, characterized in that it comprises at least one member (12) integrated with the means (9), for temporarily locking the two parts (10a, 10b) with respect to each other, in at least one predetermined relative locking position.

5. A suction arm according to any one of claims 1 to 4, characterized in that the locking member (12) comprises a ball (16) carried by a first part (10a), stressed by a resilient member (17) in the direction of a blind hole (18) in the second part (10b).

6. A suction arm according to claim 5, characterized in that the ball (16) is on the inner face of the outer part (10a) ; the single blind hole (18) or one of a plurality of blind holes is provided on the outer face of the inner part (10b).

7. A suction arm according to any one of claims 1 to 6, characterized in that it comprises, integrated with the means (9), at least one braking device (14) in the form of a friction discused in a sliding manner and acting continually, interposed wetween the parts (10a, 10b), the braking force being adjustable by adjusting the screw (11a) for locking the pivot axis (11) of the two parts (10a, 10b).

8. A suction arm according to any one of claims 1 to 7, characterized in that the means (9) are integrated with the pipe i. e. placed against or in the immediate vicinity and along the latter, regardless of its position, therefore without increasing the spatial requirement of the pipe, the arm remaining compact.

9. A suction arm according to any one of claims 1 to 8, characterized in that the parts (10a, 10b), in particular the axis (11), are placed laterally and at right angles to the sleeve (5) in order to ensure that lateral protection of the latter and of the spring (13).

10. A suction arm according to any of claims 1 to 9, characterized in that a part (10a, 10b) is associated rigidly with the end part (7) of a sleeve (8) by its end part (23) situated at right angles to the axis (8a), the axis (10c) of the part (10a, 10b) being inclined with respect to the axis (8a) on the side of the acute angle formed by the two adjacent sleeves (8).

11. A suction arm according to any one of claims 1 to 10, characterized in that it comprises on its end part (4) a fume hood (27) associated with the latter sleeve (8) by means of a deformable sleeve (29), the hood (27) and this sleeve (8) being associated with each other by second mechanical holding means (30) comprising a frame (31) associated rigidly with the sleeve (8), a support (32) associated rigidly with the hood (27) and a member (33) for associating the support (32) with the frame (31) in the form of a swivel joint comprising a locking device.

12. A suction arm according to claim 11, characterized in that the terminal opening (28) of the hood (27) is inclined with respect to the axis (27a).

13. A suction arm according to any one of claims 11, 12 characterized in that the frame (31) forms a handle, is associated with the sleeve (8) in the vicinity of its end for association with the sleeve (29), projects from this sleeve (8) above the latter and above the sleeve (29), whilst being inclined with respect to the axis (8a).

## Ansprüche

1. Saugarm in Gestalt einer Rohrleitung für Gasmedien, mit mindestens einem flexiblen Stutzen (5), der zwischen zwei steifen Stutzen (8) angeordnet ist, und mit einer mechanischen Haltevorrichtung (9) für die Leitung, welche Vorrichtung mindestens zwei Elemente (10a, 10b) aufweist, die jeweils mit einem steifen Stutzen (8) und um eine Achse (11) miteinander schwenkbar verbunden sind, dadurch gekennzeichnet, daß er mindestens eine Rückstellfeder (13) für die Elemente (10a, 10b) in Form einer Schraubenfeder aufweist, die mit den Elementen (10a, 10b) verbunden, d. h. in der Vorrichtung (9) integriert ist.

2. Saugarm nach Anspruch 1, dadurch gekennzeichnet, daß die Rückstellschraubenfeder (13) axiale Schraubenwindungen (19), die Schwenkachse (11) für die Elemente (10a, 10b) und freie Endbereiche (20a, 20b) aufweist, die mit den Elementen (10a, 10b) starr verbunden sind.

3. Saugarm nach Anspruch 1 oder 2, dadurch gekennzeichnet, daß die Rückstellschraubenfeder (13) auf und rechtwinkelig zu den Innenflächen der Elemente (10a, 10b), d. h. in der durch diese definierte Lageranordnung angeordnet ist.

4. Saugarm nach einem der Ansprüche 1 bis 3, dadurch gekennzeichnet, daß er mindestens ein Organ (12) aufweist, das die beiden Elemente (10a, 10b) in mindestens einer vorbestimmten relativen Verriegelungslage zeitweise gegeneinander verriegelt, und das in der Vorrichtung (9) integriert ist.

5. Saugarm nach der Ansprüche 1 bis 4, dadurch gekennzeichnet, daß das Verriegelungsorgan (12) eine Kugel (16) aufweist, die von einem ersten Element (10a) gehalten und durch ein elastisches Organ (17) in Richtung eines Sacklochs (18) des zweiten Elementes (10b) belastet ist.

6. Saugerm nach Anspruch 5, dadurch gekennzeichnet, daß die Kugel (16) auf der Innenfläche des äußeren Elementes (10a) liegt und daß ein einziges Sackloch (18) oder eine Vielzahl von Sacklöchern auf der Außenfläche des inneren Elementes (10b) angeordnet ist.

7. Saugarm nach einem der Ansprüche 1 bis 6, dadurch gekennzeichnet, daß er integral in der Vorrichtung (9) mindestens ein Bremsorgan (14) in Form einer Reibscheibe aufweist, die in gleitender und ständig betätigter Funktion verwendet wird, und die zwischen den Elementen (10a, 10b) angeordnet ist, wobei die Bremskraft durch die Verstellung einer Klemmschraube (11a) der Schwenkachse (11) der beiden Elemente (10a, 10b) einstellbar ist.

8. Saugarm nach einem der Ansprüche 1 bis 7, dadurch gekennzeichnet, daß die Vorrichtung (9) in die Leitung integriert ist, d. h., im Bereich der oder in unmittelbarer Nachbarschaft und längs dieser in jeglicher Stellung angeordnet ist, ohne jedoch den Platzbedarf der Leitung zu vergrößern, und daß der Arm kompakt bleibt.

9. Saugarm nach einem der Ansprüche 1 bis 8, dadurch gekennzeichnet, daß die elemente (10a, 10b), vor allem die Achse (11) seitlich und rechtwinklig zum Stutzen (5) angeordnet sind, um dessen Seitenschutz und den der Feder (13) sicher zu stellen.

10. Saugarm nach einem der Ansprüche 1 bis 9, dadurch gekennzeichnet, daß eine Element (10a, 10b) mit dem Außenteil (7) des Stutzens (8) durch sein nahe der Achse (8a) angeordnetes Außenteil (23) fest verbunden ist, wobei die Achse (10c) des Teils (10a, 10b) relativ zur Achse (8a) um einen spitzen Winkel geneigt ist, der durch die beiden benachbarten Stutzen (8) gebildet ist.

11. Saugarm nach einem der Ansprüche 1 bis 10, dadurch gekennzeichnet, daß er an seinem Außenteil (4) eine Ansaughaube (27) aufweist, die mit dem letzten Stutzen (8) über einen elastischen Stutzen (29) verbunden ist, wobei die Haube (27) und dieser Stutzen (8) durch eine zweite mechanische Haltevorrichtung (30) miteinander verbunden sind, die einen Rahmen (31) aufweist, der mit dem Stutzen (8) fest verbunden ist, derner einen Halter (32) der mit der Haube (27) fest verbunden ist, und ein Verbindungsorgan (33) vom Halter (32) zum Rahmen (31) in Form eines Gelenkes, das eine Verriegelungsvorrichtung aufweist.

12. Saugarm nach Anspruch 11, dadurch gekennzeichnet, daß die Endöffnung (28) der Haube (27) schräg zur Achse (27a) angeordnet ist.

13. Saugarm nach Anspruch 11 oder 12, dadurch gekennzeichnet, daß der Rahmen (31) einen Griff bildet, mit dem Stutzen (8) nahe dessen Verbindungsende mit dem Stutzen (29) verbunden ist und oberhalb dieses Stutzens (8) und des Stutzens (29) der zur Achse (8a) geneigt ist, über diesen Stutzen (8) hinausragt.

*Fig. 1*

*Fig. 2*

0 058 119